# EUROPÄISCHE PATENTSCHRIFT

(11) **EP 3 154 674 B1**
(45) Veröffentlichungstag und Bekanntmachung des Hinweises auf die Patenterteilung: **18.07.2018**
(21) Anmeldenummer: 15729443.0
(22) Anmeldetag: 15.06.2015
(51) Int. Cl.: B01J 19/18, B01J 19/20, B01J 19/00, C12M 1/06

(54) **REAKTIONSKAMMER FÜR EINEN CHEMISCHEN REAKTOR UND HIERAUS AUFGEBAUTER CHEMISCHER REAKTOR**
REACTION CHAMBER FOR A CHEMICAL REACTOR, AND CHEMICAL REACTOR CONSTRUCTED THEREFROM
CHAMBRE DE RÉACTION POUR UN RÉACTEUR CHIMIQUE ET RÉACTEUR CHIMIQUE CONSTRUIT À PARTIR DE CELLE-CI

(30) Priorität: 16.06.2014 DE 102014108407
(43) Veröffentlichungstag der Anmeldung: 19.04.2017
(73) Patentinhaber: Bayer Aktiengesellschaft, 51373 Leverkusen (DE)
(72) Erfinder: MLECZKO, Leslaw, 41542 Dormagen (DE); BUCHHOLZ, Sigurd, 50767 Köln (DE); BOOS, Karl-Robert, 51399 Burscheid (DE); FALSS, Sebastian, 50937 Köln (DE)
(74) Vertreter: BIP Patents
(86) Internationale Anmeldenummer: PCT/EP2015/063266
(87) Internationale Veröffentlichungsnummer: WO 2015/193214

(56) Entgegenhaltungen:
- CH-A- 502 839
- DE-A1-102004 003 925
- US-A- 4 007 016
- US-A1- 2012 208 122

## Beschreibung

Die Arbeiten, die zu dieser Erfindung geführt haben, wurden gemäß der Finanzhilfevereinbarung Nr. 246461 im Zuge des Siebten Rahmenprogramms der Europäischen Union (FP7/2007-2013) gefördert.

Die vorliegende Erfindung betrifft eine Reaktionskammer für einen chemischen Reaktor, umfassend einen Mantel der Reaktionskammer, einen Boden der Reaktionskammer mit einer in dem Boden befindlichen Öffnung und eine in der Kammer befindliche Rührerwelle mit mindestens einem damit verbundenen Rührelement. Sie betrifft weiterhin einen chemischen Reaktor, welcher eine Mehrzahl von erfindungsgemäßen Reaktionskammern umfasst, sowie ein Verfahren zur Durchführung von chemischen Reaktionen in einem solchen Reaktor.

Für viele chemische Apparate ist es vorteilhaft, eine gute Durchmischung mit einer engen Verweilzeitverteilung in kontinuierlicher Fahrweise zu kombinieren. Vorteile der guten Vermischung sind beispielsweise die Verringerung von Stoffübergangswiderständen, eine schnellere Homogenisierung oder das Suspendieren von Feststoffen.

Eine enge Verweilzeitverteilung ermöglicht häufig eine höhere Produktqualität und eine höhere Raum-Zeit-Ausbeute. Zu den Vorteilen einer kontinuierlichen Fahrweise zählen unter anderem die Verstetigung der Produktqualität, höhere Ressourceneffizienz, geringere Rüstzeiten, ein höherer Automatisierungsgrad und geringere Hold-up Volumina.

Mögliche Anwendungen, auf die das genannte Anforderungsprofil zutreffen kann, sind die kontinuierliche Verarbeitung von ein- oder mehrphasigen Flüssigkeiten, Dispersionen, Gas-Flüssig-Mischungen, überkritischen Fluiden oder Mischungen dieser Materialien in verschiedenen verfahrenstechnischen Apparaten wie chemischen oder biologischen Reaktoren sowie Apparaten zur Absorption, Extraktion oder Kristallisation.

In vielen chemischen Prozessen ist zusätzlich der erzielbare Wärmeaustausch ein zu beachtender Parameter. Mikrostrukturierte Apparate bieten hier die Möglichkeit, sehr hohe spezifische Wärmeaustauschflächen zu erreichen. Aufgrund ihres geringen Volumens sind sie jedoch nicht für Reaktionen mit langer Verweilzeit geeignet, wenn ein gewisser Durchsatz erreicht werden soll. Ferner stellt die Gefahr von Fouling und Verblockungen durch im Prozess vorhandene Feststoffe aufgrund der kleinen Kanaldurchmesser eine große Herausforderung dar.

Da Feststoffe, z.B. in Form eines heterogenen Katalysators oder unlöslicher Reaktionsprodukte, in vielen verfahrenstechnischen Prozessen als erwünschte oder unerwünschte Bestandteile vorliegen, kann das Handling von suspendierten Feststoffen eine zusätzliche Anforderung an das Prozessequipment darstellen.

In der Praxis kann das definierte Anforderungsprofil am ehesten durch eine Kaskade in Reihe geschalteter, kontinuierlich betriebener Rührkessel realisiert werden. Unter bestimmten Bedingungen kann jedoch eine kompaktere Bauweise des Apparates nötig sein. Ein solcher Anwendungsfall ist z.B. der Einbau in kompakten, modularen Produktionsanlagen.

Es ist weiterhin bekannt, dass das definierte Anforderungsprofil in bestimmten Anwendungsfällen auch durch die Unterteilung eines Strömungsrohres in mehrere Kompartimente, die jeweils durch geeignete Rührer gemischt werden und die durch Öffnungen miteinander verbunden sind, erfüllt werden kann.

Jedoch hängt die Leistungsfähigkeit eines solchen Apparates stark von den Betriebsbedingungen ab. Eine hohe Rührerdrehzahl, lange Verweilzeiten und große Öffnungen zwischen den einzelnen Kompartimenten führen zu einem höheren Grad an Rückvermischung und damit zu einer weiteren Verweilzeitverteilung (z.B. L. Zhang, Q. Pan, G.L. Rempel, Residence Time Distribution in a Multistage Agitated Contactor with Newtonian Fluids: CFD Prediction and Experimental Validation: Industrial & Engineering Chemistry Research, Ind. Eng. Chem. Res. 46 2007, 3538-3546.).

Solche Apparate finden vor allem in der Extraktionstechnik breite Anwendung. Theoretisch kann die Rückvermischung durch die Verwendung sehr kleiner Öffnungen zwischen angrenzenden Kompartimenten minimiert werden. In diesem Fall steigt jedoch der Druckverlust im Apparat und der Austrag von Feststoffen ist nicht mehr möglich, so dass diese Maßnahme in der praktischen Anwendung häufig ungeeignet ist.

Die Anwendung eines kaskadierten Rohres in der Reaktionstechnik ist beispielsweise in US 4,370,470 (DE 32 13 628 A1) beschrieben. Gegenstand ist eine Kontaktvorrichtung, bei der es sich um ein senkrechtes langes zylindrisches Gehäuse mit geschlossenen Enden handelt, das durch waagerechte Prallplatten in mehrere Einzelkammern unterteilt ist, mit Zugang von einer Kammer zur anderen durch konzentrische kreisförmige Öffnungen, die axial zentriert in den Prallwänden sind, mit einer kontinuierlich drehbaren Welle, die sich konzentrisch mit den Prallwänden innerhalb des Gehäuse erstreckt, mit mindestens einer Rühreinrichtung, die an die Welle befestigt ist, in jeder Kammer, wobei die Welle in den kreisförmigen Öffnungen ringförmige Öffnungen in den Prallwänden ergibt, derart, dass das Verhältnis des Rückströmungsausmaßes zum Beschickungsausmaß durch die Öffnungen kleiner als 1,5 ist. Beschrieben wird auch ein Verfahren zur kontinuierlichen Herstellung von Arylensulfidpolymeren, bei dem Reaktionskomponenten, die geeignet zur Herstellung von Poly(arylensulfid) sind, in mindestens eine erste Kammer des vorstehend beschriebenen Kontaktgefäßes eingespeist werden, wodurch ein Reaktionsgemisch gebildet wird, das durch die Kammern der Kontaktvorrichtung geführt wird, während jede Kammer unter Bedingungen zur Bildung von Arylensulfidpolymeren gehalten wird, und Arylensulfidpolymeres aus einer Kammer gewonnen wird, die entfernt von der Kammer liegt, in die die Ausgangsreaktionskomponenten eingeführt werden. Der erzielbare Rückvermischungsgrad in derartigen Apparaten ist für Anwendungen, die eine sehr enge Verweilzeitverteilung benötigen, häufig zu hoch; insbesondere, wenn das Reaktorvolumen klein (einige Liter oder weniger) ist und die realisierbare Stufenzahl damit begrenzt ist.

WO 2006/126891 (EP 1 904 225) offenbart beispielsweise einen zylindrischen Reaktor für die kontinuierliche Behandlung einer gerührten Stoffzusammensetzung, die mindestens zwei Komponenten umfasst, umfassend eine Zahl von Reaktorkammern, die in einer hauptsächlich vertikalen Säule angeordnet sind, getrennt durch Bodenplatten, während der Transport der Stoffzusammensetzung von einer beliebigen Reaktorkammer im stationären Zustand angeordnet ist, um zu der angrenzenden Kammer unterhalb zu erfolgen, wobei jede Reaktorkammer mit einem Flügelmechanismus versehen ist. Der Flügelmechanismus umfasst ein ringförmiges Glied, das mit der Reaktorkammer konzentrisch ist und eine vertikale Verlängerung aufweist und mindestens ein bewegbares Rührglied, das angeordnet ist, um eine vertikale Bewegungskomponente in dem Stoff in der Kammer herbeizuführen. Der Transport ist von einer Kammer zu der nächsten Kammer angeordnet, um periodisch durch eine Öffnung mit einer Schieberklappe in der Bodenplatte jeder Kammer stattzufinden. Ein solcher Apparat hat jedoch den Nachteil, dass an jeder Kammer ein zusätzliches bewegliches Teil und damit verbunden auch eine Dichtung vorzusehen ist. Kaskadierte Rohranlagen mit verlängerten Spalten zur Verringerung der Rückvermischung werden in den folgenden Publikationen beschrieben: J. R. Couper, Chemical process equipment: Selection and design, 2nd ed., Elsevier, Amsterdam, Boston, 2005, S.307-315 und B. C. Xu, W..R. Penney, J. B. Fasano, Interstage Backmixing for Single-Phase Systems in Compartmented, Agitated Columns: Design Correlations, Ind. Eng. Chem. Res. 44 (2005) 6103-6109. US2012/208122A1, US4007016A und DE102004003925A1 beschreiben einen chemischen Reaktor mit einer Mehrzahl von Reaktionskammern. Insbesondere für abrasive Systeme ist es wünschenswert, eine robustere apparative Lösung der beschriebenen Problemstellung zur Verfügung zu stellen. Zusätzlich ist es wünschenswert, das Apparatedesign möglichst flexibel zu gestalten, so dass ein Einsatz mit verschiedenen Systemen und unter verschiedenen Prozessbedingungen möglich ist. Hierbei umfasst der Flexibilitätsbegriff sowohl die Eigenschaft, das Gesamtvolumen des Reaktors flexibel zu verändern wie auch den Austausch einzelner Elemente wie Rührer oder Strombrecher zur Optimierung der Geometrie für einen bestimmten Anwendungsfall.

Die vorliegende Erfindung hat sich die Aufgabe gestellt, einen Apparat bereitzustellen, welcher die genannten Anforderungen kombiniert. Vorzugsweise stellt dieser Apparat weiterhin eine möglichst hohe spezifische Wärmeaustauschfläche zur Verfügung.

Erfindungsgemäß gelöst wird diese Aufgabe durch eine Reaktionskammer für einen chemischen Reaktor, umfassend einen Mantel der Reaktionskammer, einen Boden der Reaktionskammer mit einer in dem Boden befindlichen Öffnung und eine in der Kammer befindliche Rührerwelle mit mindestens einem damit verbundenen Rührelement, wobei die Rührerwelle in Längsrichtung gesehen einen Anfang und ein Ende aufweist. Weiterhin ist in der Öffnung des Bodens eine herausnehmbare Hülse vorgesehen, welche aus der Reaktionskammer herausragt, die Hülse ist in einer Flucht mit der Drehachse der Rührerwelle angeordnet, der Innendurchmesser der Hülse ist größer als der Durchmesser der Rührerwelle und die Rührerwelle ist an ihrem Anfang und/oder an ihrem Ende eingerichtet, um reversibel ein mittels einer weiteren Welle bereitgestelltes Drehmoment aufzunehmen und/oder ein Drehmoment auf eine weitere Welle zu übertragen.

Mittels einer Mehrzahl von erfindungsgemäßen Reaktionskammern kann ein chemischer Reaktor modular aufgebaut werden und flexibel an sich verändernde Anforderungen angepasst werden. Die erfindungsgemäße Reaktionskammer kann selbstverständlich nicht nur für chemische Reaktionen im engeren Sinne eingesetzt werden, sondern auch beispielsweise für Extraktionen und dergleichen.

Der "Mantel der Reaktionskammer" ist derjenige Teil der Reaktorkammer, welcher bei einer aufrecht stehenden Reaktionskammer die seitliche Begrenzung des Kammerinneren zur Außenwelt, darstellt. Im Fall einer zylindrischen oder zylinderähnlichen Reaktionskammer handelt es sich dann um den Zylindermantel. Dementsprechend ist der "Boden der Reaktionskammer" die in vertikaler Richtung gesehen untere Begrenzung des Kammerinneren zur Außenwelt.

Dem Gedanken einer modularen Verwendbarkeit folgend liegt in der Reaktionskammer bereits eine Rührerwelle mit mindestens einem damit verbundenen Rührelement zum Umrühren des Inhalts der Reaktionskammer vor. Es können sowohl radial als auch tangential fordernde Rührelemente eingesetzt werden. Die Rührelemente können auch von der Rührerwelle abnehmbar und somit austauschbar gestaltet werden.

Weiterhin können in der Reaktionskammer zusätzliche Einbauten vorliegen. Diese erfüllen zwei Hauptzwecke. Zum einen dienen Sie als Strombrecher und verhindern das Mitrotieren der Flüssigkeit im Apparat und unterstützen eine intensive Durchmischung, zum anderen unterstützen sie eine axiale und radiale Lagerung der Rührerwelle. Durch den modularen Aufbau ist die schnelle Anpassung an verschiedene Stoffsysteme realisierbar. Beispielsweise können in einem System höherer Viskosität ohne großen Aufwand die Strombrecher angepasst und Ankerrührer eingesetzt werden.

Eine feste obere Begrenzung des Kammerinneren zur Außenwelt, welche als "Deckel" aufgefasst werden könnte, ist für die erfindungsgemäße Reaktionskammer nicht zwingend notwendig. Dieses deshalb, da mehrere Reaktionskammern aufeinander gestapelt werden können (und sollen, um den weiter unten beschriebenen erfindungsgemäßen chemischen Reaktor zu bilden) und der Boden der einen Reaktionskammer als Deckel der unter ihr liegenden Kammer fungieren kann.

Der Boden der erfindungsgemäßen Reaktionskammer weist ferner eine Öffnung auf. Durch diese Öffnung können Rührerwellen aus dem Inneren der Reaktionskammer herausgeführt werden und ferner Stoffe in die Kammer eingetragen oder aus der Kammer ausgetragen werden. Am Anfang und/oder am Ende der Rührerwelle ist diese eingerichtet, um ein Drehmoment aufzunehmen oder weiterzugeben. Vorzugsweise handelt es sich um eine wieder lösbare formschlüssige Verbindung. Dieses kann beispielsweise mit einer einfachen Steckverbindung wie einem Innensechskant realisiert werden. Auf diese Weise kann bei aufeinander gestapelten erfindungsgemäßen Reaktionskammern eine gemeinsame Rührerwelle für alle Reaktionskammern geschaffen werden.

Die erfindungsgemäße Reaktionskammer weist ferner eine herausnehmbare Hülse auf, welche in der Öffnung des Bodens angeordnet ist. In geometrischer Hinsicht ist die Hülse (und somit auch die Öffnung des Bodens der Reaktionskammer) in einer Flucht mit der Drehachse der Rührerwelle angeordnet, damit bei den zuvor erwähnten aufeinander gestapelten Reaktionskammern eine durchgehende Rührerwelle erhalten werden kann.

Weiterhin ist der Innendurchmesser der Hülse größer als der Durchmesser der Rührerwelle (selbstverständlich werden an der Rührerwelle angebrachte Rührelemente bei der Bestimmung des Durchmessers nicht berücksichtigt). Dann kann auch bei einer durch die Öffnung und Hülse hindurch geführten Rührerwelle ein Stoffaustausch zwischen aufeinander gestapelten Kammern stattfinden. Vorzugsweise ist die Differenz zwischen dem Innendurchmesser der Hülse und dem Durchmesser der Rührerwelle > 0 mm bis ≤ 10 mm, mehr bevorzugt ≥ 1 mm bis ≤ 8 mm und besonders bevorzugt ≥ 2 mm bis ≤ 7 mm. Dadurch, dass die Hülse herausnehmbar ist, kann für jedes Reaktionssystem der Stoffaustausch durch die Öffnung zwischen Hülse und Rührerwelle individuell angepasst werden.

Dadurch, dass die Hülse aus der Reaktionskammer hinausragt, sorgt sie für eine verringerte Rückvermischung zwischen dem Inhalt ihrer Reaktionskammer und dem Inhalt der darauffolgenden Reaktionskammer, in die sie wiederum hineinragt. Das Ausmaß, in dem die Hülse durch die Öffnung aus der Reaktionskammer herausragt, kann beispielsweise ≥ 10% bis ≤ 200%, mehr bevorzugt ≥ 20% bis ≤ 150% und besonders bevorzugt ≥ 30% bis ≤ 100% ihres Innendurchmessers betragen, jeweils gemessen von der Unterseite des Bodens.

Weitere Ausführungsformen und Aspekte der vorliegenden Erfindung werden nachfolgend geschildert. Sie können beliebig miteinander kombiniert werden, sofern sich nicht aus dem Kontext eindeutig das Gegenteil ergibt.

In einer Ausführungsform der erfindungsgemäßen Reaktionskammer ist die Rührerwelle durch die Hülse aus der Reaktionskammer herausgeführt, so dass sie aus der Reaktionskammer herausragt und zwischen Rührerwelle und Hülse ein Spalt gebildet wird.

Vorzugsweise weist der Spalt zwischen Rührerwelle und Hülse eine Weite von > 0 mm bis ≤ 5 mm auf. Bevorzugt sind Werte von ≥ 0,5 mm bis ≤ 4 mm und besonders bevorzugt ≥ 1 mm bis ≤ 3,5 mm.

In einer weiteren Ausführungsform der erfindungsgemäßen Reaktionskammer weist der Boden eine Neigung gegenüber der Horizontalen von > 0° bis ≤ 60° auf. Bevorzugte Neigungen sind > 5° bis ≤ 50°, mehr bevorzugt > 10° bis ≤ 45°. Eine solche Anschrägung des Kammerbodens dient der Unterstützung eines Feststofftransports innerhalb der Reaktionskammer. Weiterhin können die Ecken, an denen der Boden an den Mantel stößt, ausgerundet sein.

In einer weiteren Ausführungsform der erfindungsgemäßen Reaktionskammer sind der Mantel und der Boden der Reaktionskammer gemeinsam als Heiz- und/oder Kühlmantel ausgeführt. Dieses lässt sich beispielsweise durch eine doppelwandige Konstruktion mit einem Hohlraum für ein durchströmendes Temperiermedium erreichen. Diese Ausführungsform hat generell den Vorteil, dass eine möglichst große spezifische Wärmeübertragungsfläche zur Verfügung gestellt werden kann: es erfolgt die Temperierung nicht nur über die Seitenwände, sondern auch über die Böden der Kammer. Zur Maximierung der äußeren Wärmeübergangskoeffizienten kann die Anströmung im Hohlraum tangential erfolgen, so dass die gesamte Strömung des Temperiermediums in Rotation versetzt und eine hohe Relativgeschwindigkeit zwischen Wand und Temperiermedium erreicht wird. Die Einströmgeschwindigkeit kann durch Variation des Durchmessers der entsprechenden Anschlüsse angepasst werden.

In einer weiteren Ausführungsform der erfindungsgemäßen Reaktionskammer wird die Rührerwelle innerhalb der Reaktionskammer durch ein Lager aufgenommen, welches innerhalb der Reaktionskammer abgestützt ist.

In einer weiteren Ausführungsform der erfindungsgemäßen Reaktionskammer umfasst die Hülse einen polymeren Werkstoff. Geeignet sind insbesondere Polytetrafluroethylen (PTFE) und Polyolefine wie Polyethylen (PE) und Polypropylen (PP).

Zum Erreichen einer hohen spezifischen Oberfläche und einer hohen Stufenzahl auf kleinem Bauraum bieten flache Kammern Vorteile. Zu flache Kammern unterdrücken jedoch die Ausbildung von Wirbeln und verhindern so eine effektive Vermischung. In einer weiteren Ausführungsform der erfindungsgemäßen Reaktionskammer weist daher die Kammer ein Verhältnis von Höhe zu Durchmesser von ≥ 0,4:1 bis ≤ 1:1 auf. Der Durchmesser ist hierbei als Innendurchmesser der Kammer zu verstehen und die Höhe als Innenhöhe, gemessen vom tiefsten Punkt innerhalb der Kammer vertikal bis zum höchsten Punkt innerhalb der Kammer. Bevorzugte Verhältnisse von Kammerhöhe zu -durchmesser liegen bei ≥ 0,5:1 bis ≤ 0,9:1 und mehr bevorzugt ≥ 0,6:1 bis ≤ 0,8:1. Der Kammerinnendurchmesser beträgt beispielsweise zwischen 2 und 15 cm.

In einer weiteren Ausführungsform der erfindungsgemäßen Reaktionskammer umfasst diese weiterhin zusätzliche Zuführungen und/oder Abläufe, durch die Substanzen eingeführt und/oder ausgetragen werden können. Zusätzliche Zuführungen und/oder Abläufe können erwünscht sein, um nicht alle Reaktionskomponenten am Beginn des Reaktors zuzugeben, sondern entlang des Reaktors. Auf diese Weise können in einer chemischen Reaktion zum Beispiel unerwünschten Neben- oder Folgereaktionen unterdrückt werden. Analog kann es gewünscht sein, entstehende Stoffe abzutrennen.

Ein weiterer Aspekt der vorliegenden Erfindung ist ein chemischer Reaktor, wobei der Reaktor eine Mehrzahl von Reaktionskammern gemäß der vorliegenden Erfindung umfasst, wobei mindestens eine erste Reaktionskammer und eine zweite Reaktionskammer aufeinander folgend angeordnet sind und die Rührerwelle der ersten Reaktionskammer mit der Rührerwelle der zweiten Reaktionskammer zur Übertragung eines Drehmoments verbunden ist.

Vorzugsweise werden 2 bis 20 einzelne Reaktionskammern eingesetzt. Es ist weiterhin möglich, dass mehrere Reaktionskammern durch zusätzliche Zuführungen und/oder Abläufe miteinander verbunden sind.

Die Erfindung betrifft weiterhin ein Verfahren zur Durchführung einer chemischen Reaktion, wobei die Reaktion in einem Reaktor gemäß der vorliegenden Erfindung durchgeführt wird.

In einer Ausführungsform des erfindungsgemäßen Verfahrens wird die Reaktion zumindest zeitweise mit einer konstanten Menge von in den Reaktor eingebrachten und aus dem Reaktor ausgetragenen Substanzen durchgeführt.

In einer weiteren Ausführungsform des erfindungsgemäßen Verfahrens sind in dem Rührreaktor eine erste erfindungsgemäße Reaktionskammer umfassend zusätzliche Zuführungen und/oder Abläufe, durch die Substanzen eingeführt und/oder ausgetragen werden können und eine zweite erfindungsgemäße Reaktionskammer umfassend zusätzliche Zuführungen und/oder Abläufe, durch die Substanzen eingeführt und/oder ausgetragen werden können aufeinander folgend angeordnet. Weiterhin ist die Rührerwelle der ersten Reaktionskammer mit der Rührerwelle der zweiten Reaktionskammer zur Übertragung eines Drehmoments verbunden und in der ersten und/oder zweiten Reaktionskammer wird wenigstens ein Betriebszustand überwacht, bei einer zuvor bestimmten Abweichung des Betriebszustandes von einem zuvor bestimmten Wert für diesen Betriebszustand werden die in diese Reaktionskammer einmündenden Zuführungen geschlossen und die ursprünglich durch diese Zuführungen transportierten Substanzen werden in eine andere Reaktionskammer eingeführt.

Hierbei ist es bevorzugt, dass der überwachte Betriebszustand der Druckabfall von einer Reaktionskammer zur benachbarten Reaktionskammer ist.

Diese Reaktionsführung ermöglicht es, bei Verstopfungen oder anderen Störungen in einer Reaktionskammer diese stillzulegen und die Stoffströme im Reaktor an dieser Kammer vorbeizuleiten. So kann die Reaktion an einer nachfolgenden Stelle weitergeführt werden.

In einer weiteren Ausführungsform des erfindungsgemäßen Verfahrens ist die Reaktion eine Mehrphasenreaktion. Hierunter fallen beispielsweise sowohl flüssig/flüssig-Systeme als auch fest/flüssig-Systeme.

Die vorliegende Erfindung wird anhand der nachfolgenden Figuren näher erläutert, ohne darauf beschränkt zu sein. Es zeigen:
- FIG. 1: eine erfindungsgemäße Reaktionskammer in Ansicht von oben und im Querschnitt
- FIG. 2: mehrere aufeinander gestapelte erfindungsgemäße Reaktionskammern im Querschnitt
- FIG. 3: einen erfindungsgemäßen chemischen Reaktor

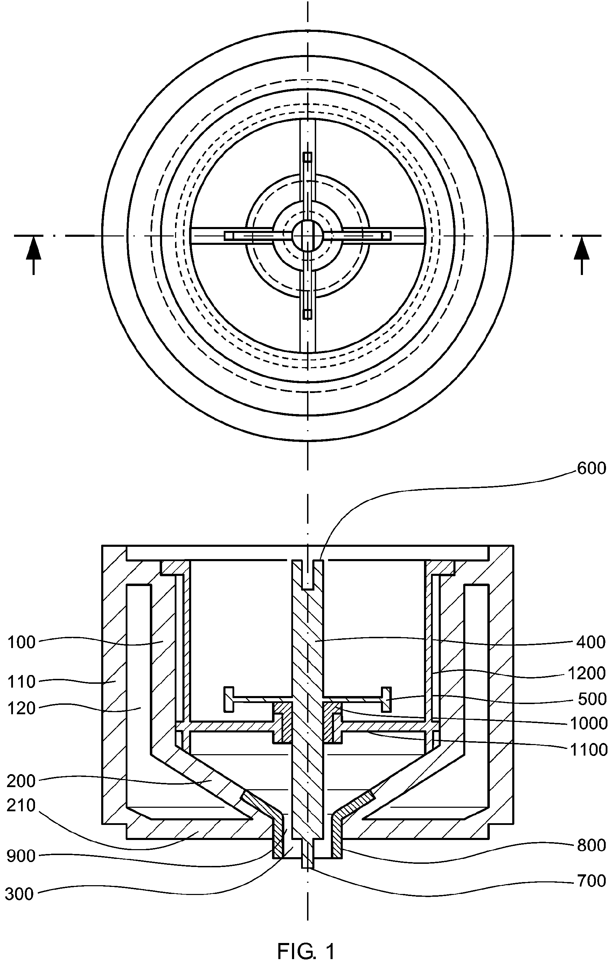

FIG. 1 zeigt eine erfindungsgemäße Reaktionskammer in einer kombinierten Ansicht mit einer Draufsicht (oberer Teil der Figur) und einer seitlichen Querschnittsansicht (unterer Teil der Figur). Die Reaktionskammer weist einen Mantel 100, einen in diesem Falle um 33° geneigten Boden 200 sowie eine Öffnung 300 im Boden 200 auf. Der Mantel 100 und der Boden 200 sind gemeinsam als Heiz- und Kühlmantel ausgebildet. Hierzu wird eine Doppelmantelkonstruktion mit einem zweiten Mantel 110 und einem zweiten Boden 210 verwendet, welche einen Hohlraum 120 beinhaltet. Durch diesen Hohlraum 120 kann ein Temperiermedium zum Wärmeaustausch mittels hier nicht gezeigter Ein- und Auslässe geführt werden. Somit wird auch der Kammerboden geheizt oder gekühlt und nicht nur der Mantel wie in vielen herkömmlichen Konstruktionen von Kesselreaktoren.

Die Reaktionskammer weist weiterhin eine Rührerwelle 400 zum Antrieb von Rührelementen 500 auf. Der Anfang 600 der Rührerwelle 400 ist in FIG. 1 oben, das Ende 700 unten dargestellt.

Anfang 600 und Ende 700 der Rührerwelle 400 sind als Stecker beziehungsweise Buchse von Steckverbindungen konzipiert, so dass beim Aufeinanderstapeln mehrerer Reaktionskammern die Rührerwellen von zwei aufeinanderfolgenden Reaktionskammern in Rotationsrichtung formschlüssig ineinandergreifen. Dann bilden sie eine gemeinsame Rührerwelle, mit der die Rührelemente der einzelnen Kammern angetrieben werden können.

Innerhalb der Reaktionskammer wird die Rührerwelle 400 von einem Lager 1000 aufgenommen, welches selbst über entsprechende Stützen 1100 in der Reaktionskammer getragen wird. Weiterhin liegen innerhalb der Reaktionskammer Strombrecher 1200 vor, welche im Zusammenwirken mit Rührelementen 500 für eine größere Durchmischung des Reaktorinhalts sorgen.

In der Öffnung 300 des Bodens 200 der Reaktionskammer liegt ferner eine herausnehmbare Hülse 800 vor, welche (wie hier dargestellt nach unten) aus der Reaktionskammer hinausragt. Die Hülse 800 ist in einer Flucht mit der Drehachse der Rührerwelle 600 angeordnet. In FIG. 1 sind Hülse und Drehachse in der Reaktionskammer zentriert.

Der Innendurchmesser der Hülse 800 ist größer als der Durchmesser der Rührerwelle 400 auf der Höhe der Hülse 800. Weiterhin ragt die Rührerwelle 400 durch die Hülse 800 aus der Reaktionskammer heraus. Dadurch wird zwischen Rührerwelle 400 und Hülse 800 ein Spalt 900 gebildet, durch den bei mehreren aufeinandergestapelten Reaktionskammern ein Stoffaustausch zwischen einer Kammer und der benachbarten Kammer stattfinden kann.

Zur Erhöhung der Vielseitigkeit und Modularität der Verwendung der erfindungsgemäßen Reaktionskammer sind nicht nur die Hülse 800, sondern auch die Rührerwelle 400, das Lager 500, die Stützen 1100 und die Strombrecher 1200 herausnehmbar und somit durch andere, für einen konkreten Anwendungsfall angepasste Konstruktionen ersetzbar.

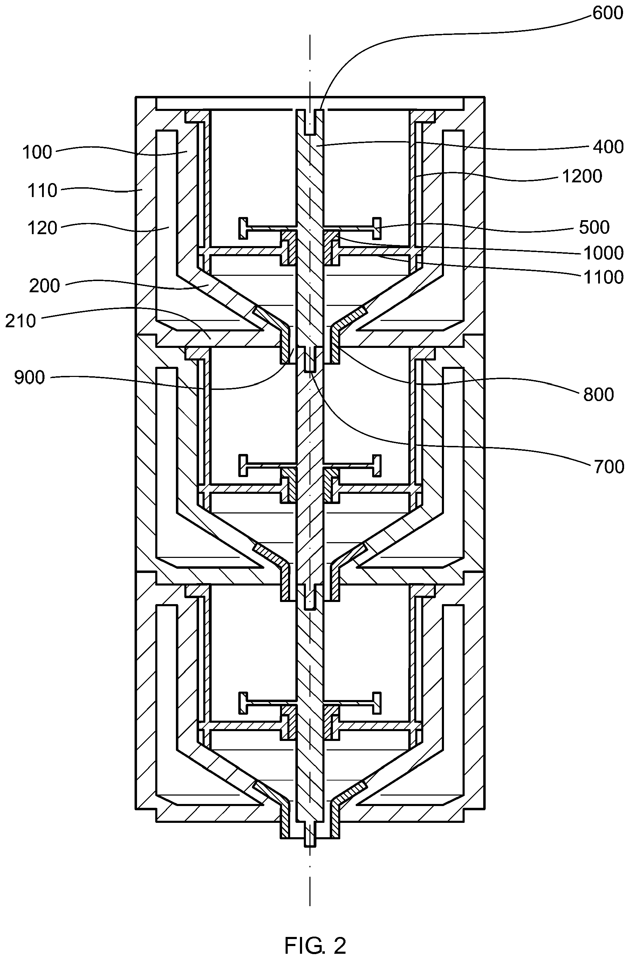

FIG. 2 zeigt eine Querschnittsansicht von drei aufeinander gestapelten erfindungsgemäßen Reaktionskammern, wie sie in einem erfindungsgemäßen chemischen Reaktor auftreten können. Die individuellen Kammern sind wie in FIG. 1 dargestellt und erläutert. Wie zu erkennen ist, sind die Reaktionskammern so konzipiert, dass der untere Abschluss einer Kammer den oberen Abschluss der darunter liegenden Kammer bildet. Dadurch lässt sich ein chemischer Reaktor modular aufbauen. Selbstverständlich können aber auch noch zwischen den einzelnen Reaktionskammern Dichtungsmittel vorgesehen sein.

Die in Rotationsrichtung formschlüssig ineinander greifenden Rührerwellen 400 bilden, was die Übertragung eines Drehmoments betrifft, eine gemeinsame Rührerwelle. Hierbei kann festgestellt werden, dass auch in dem Spalt 900, welcher zwischen Rührerwelle 400 und Hülse 800 gebildet wird und durch den ein Stoffaustausch zwischen benachbarten Reaktionskammern stattfinden kann, Scherkräfte auftreten. Es existiert somit keine "tote Zone", in der der Inhalt der Reaktionskammer nicht durchgerührt wird.

Die Breite der Spalte 900 und damit der Stoffübergang zwischen den einzelnen Reaktionskammern lassen sich mittels des Durchmessers der Rührerwelle und/oder des Innendurchmessers der Hülsen 800 einstellen. Aus praktischen Gründen ist es bevorzugt, nur die Hülsen 800 auszutauschen, wenn eine andere Spaltbreite zwischen den Kammern gewünscht wird. Dadurch, dass die Hülsen 800 herausnehmbar sind, ist dieses in einfacher Weise zu bewerkstelligen.

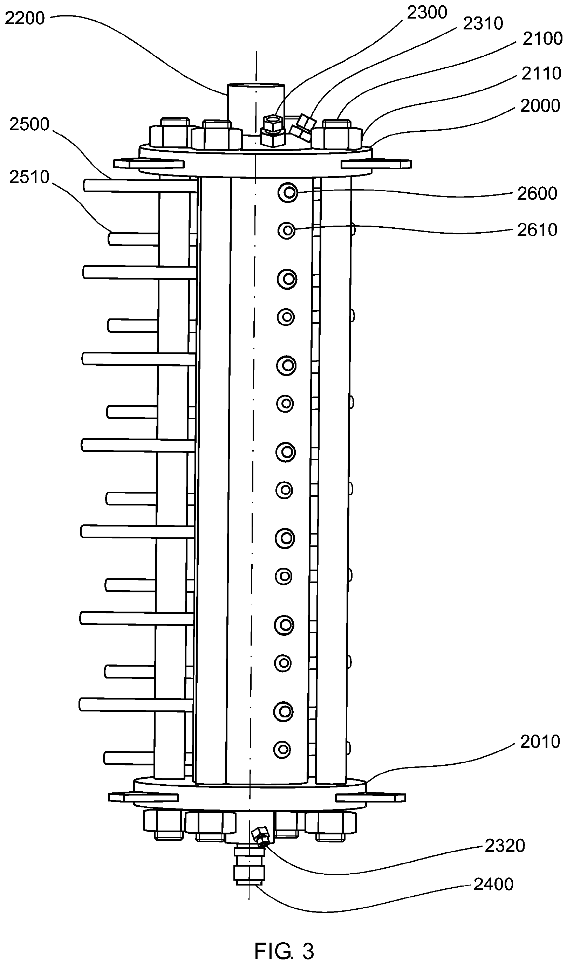

FIG. 3 zeigt schematisch einen erfindungsgemäßen chemischen Reaktor mit insgesamt sieben erfindungsgemäßen Reaktionskammern. Die Reaktionskammern sind analog zu der in FIG. 2 gezeigten Anordnung aufeinander gestapelt und nach oben und unten mit einer Deckelplatte 2000 und einer Bodenplatte 2010 abgeschlossen. Mittels Zugstangen 2100 und Muttern 2110 wird die Anordnung mechanisch stabilisiert.

Ein Drehmoment zum Antrieb der Rührerwellen wird mittels Kupplung 2200 auf die Rührerwellen im Inneren des chemischen Reaktors übertragen. In der Deckelplatte 2000 sind weiterhin Zugänge 2300 und 2310 angeordnet, durch die Stoffe oder Messfühler in die oberste Reaktionskammer eingebracht werden können. Ein solcher Zugang 2320 befindet sich auch an dem Auslauf 2400, welcher in der Bodenplatte 2010 integriert ist.

Über die Zuleitungen 2500 und die Abläufe 2510 können die Heiz-/Kühlmäntel der einzelnen Reaktionskammern mit einem Temperiermedium versehen werden. Eine individuelle Temperierung ist möglich.

Die einzelnen Reaktionskammern sind über Zugänge 2600 und 2610 für Stoffeintrag, Stoffaustrag und Messfühler zugänglich. Durch eine geeignet gewählte Rohrleitungsinstallation kann ferner ein Überbrücken einer Reaktionskammer erreicht werden, falls im laufenden Betrieb eine Störung auftritt.

## Patentansprüche

1. Reaktionskammer für einen chemischen Reaktor, umfassend:
einen Mantel (100) der Reaktionskammer,
einen Boden (200) der Reaktionskammer mit einer in dem Boden befindlichen Öffnung (300),
eine in der Kammer befindliche Rührerwelle (400) mit mindestens einem damit verbundenen Rührelement (500), wobei die Rührerwelle (400) in Längsrichtung gesehen einen Anfang (600) und ein Ende (700) aufweist,
**dadurch gekennzeichnet, dass**
in der Öffnung (300) des Bodens (400) eine herausnehmbare Hülse (800) vorgesehen ist, welche aus der Reaktionskammer herausragt,
die Hülse (800) in einer Flucht mit der Drehachse der Rührerwelle (400) angeordnet ist,
der Innendurchmesser der Hülse (800) größer als der Durchmesser der Rührerwelle (400) ist
und dass die Rührerwelle (400) an ihrem Anfang (600) und/oder an ihrem Ende (700) eingerichtet ist, um reversibel ein mittels einer weiteren Welle bereitgestelltes Drehmoment aufzunehmen und/oder ein Drehmoment auf eine weitere Welle zu übertragen.

2. Reaktionskammer gemäß Anspruch 1, wobei die Rührerwelle (400) durch die Hülse (800) aus der Reaktionskammer herausgeführt ist, so dass sie aus der Reaktionskammer herausragt und zwischen Rührerwelle und Hülse ein Spalt (900) gebildet wird.

3. Reaktionskammer gemäß Anspruch 1 oder 2, wobei der Boden (200) eine Neigung gegenüber der Horizontalen von > 0° bis ≤ 60° aufweist.

4. Reaktionskammer gemäß einem der Ansprüche 1 bis 3, wobei der Mantel (100) und der Boden (200) der Reaktionskammer gemeinsam als Heiz- und/oder Kühlmantel ausgeführt sind.

5. Reaktionskammer gemäß einem der Ansprüche 1 bis 4, wobei die Rührerwelle innerhalb der Reaktionskammer durch ein Lager (1000) aufgenommen wird, welches innerhalb der Reaktionskammer abgestützt ist.

6. Reaktionskammer gemäß einem der Ansprüche 1 bis 5, wobei die Hülse (800) einen polymeren Werkstoff umfasst.

7. Reaktionskammer gemäß einem der Ansprüche 1 bis 6, wobei die Kammer ein Verhältnis von Höhe zu Durchmesser von ≥ 0,4:1 bis ≤ 1:1 aufweist.

8. Reaktionskammer gemäß einem der Ansprüche 2 bis 7, wobei der Spalt (900) zwischen Rührerwelle (400) und Hülse (800) eine Weite von > 0 mm bis ≤ 5 mm aufweist.

9. Reaktionskammer gemäß einem der Ansprüche 1 bis 8, weiterhin umfassend zusätzliche Zuführungen (2600) und/oder Abläufe (2610), durch die Substanzen eingeführt und/oder ausgetragen werden können.

10. Chemischer Reaktor, **dadurch gekennzeichnet, dass** der Reaktor eine Mehrzahl von Reaktionskammern gemäß einem der Ansprüche 1 bis 9 umfasst, wobei mindestens eine erste Reaktionskammer und eine zweite Reaktionskammer aufeinander folgend angeordnet sind und die Rührerwelle der ersten Reaktionskammer mit der Rührerwelle der zweiten Reaktionskammer zur Übertragung eines Drehmoments verbunden ist.

11. Verfahren zur Durchführung einer chemischen Reaktion, **dadurch gekennzeichnet, dass** die Reaktion in einem Reaktor gemäß Anspruch 10 durchgeführt wird.

12. Verfahren gemäß Anspruch 11, wobei die Reaktion zumindest zeitweise mit einer konstanten Menge von in den Reaktor eingebrachten und aus dem Reaktor ausgetragenen Substanzen durchgeführt wird.

13. Verfahren gemäß Anspruch 11 oder 12, wobei in dem Rührreaktor eine erste Reaktionskammer gemäß Anspruch 9 und eine zweite Reaktionskammer gemäß Anspruch 9 aufeinander folgend angeordnet sind und die Rührerwelle der ersten Reaktionskammer mit der Rührerwelle der zweiten Reaktionskammer zur Übertragung eines Drehmoments verbunden ist und weiterhin in der ersten und/oder zweiten Reaktionskammer wenigstens ein Betriebszustand überwacht wird, bei einer zuvor bestimmten Abweichung des Betriebszustandes von einem zuvor bestimmten Wert für diesen Betriebszustand die in diese Reaktionskammer einmündenden Zuführungen geschlossen werden und die ursprünglich durch diese Zuführungen transportierten Substanzen in eine andere Reaktionskammer eingeführt werden.

14. Verfahren gemäß Anspruch 13, wobei der überwachte Betriebszustand der Druckabfall von einer Reaktionskammer zur benachbarten Reaktionskammer ist.

15. Verfahren gemäß einem der Ansprüche 11 bis 14, wobei die Reaktion eine Mehrphasenreaktion ist.

## Claims

1. Reaction chamber for a chemical reactor, comprising:
a casing (100) of the reaction chamber,
a floor (200) of the reaction chamber having an opening (300) located in the floor,
an agitator shaft (400) located in the chamber and having at least one agitator element (500), connected thereto, wherein the agitator shaft (400), seen in the longitudinal direction, has a beginning (600) and an end (700),
**characterized in that**
in the opening (300) of the floor (400) a removable sleeve (800) is provided, which projects out of the reaction chamber,
the sleeve (800) is arranged in alignment with the axis of rotation of the agitator shaft (400),
the internal diameter of the sleeve (800) is greater than the diameter of the agitator shaft (400)
and **in that** the agitator shaft (400), at the beginning (600) thereof and/or at the end (700) thereof, is adapted to absorb reversibly a torque provided by means of a further shaft and/or to transmit a torque to a further shaft.

2. Reaction chamber according to Claim 1, wherein the agitator shaft (400) is conducted out of the reaction chamber through the sleeve (800) in such a manner that it projects out of the reaction chamber and a gap (900) is formed between agitator shaft and sleeve.

3. Reaction chamber according to Claim 1 or 2, wherein the floor (200) has an inclination to the horizontal of > 0° to ≤ 60°.

4. Reaction chamber according to any one of Claims 1 to 3, wherein the casing (100) and the floor (200) of the reaction chamber are constructed jointly as heating and/or cooling casing.

5. Reaction chamber according to any one of Claims 1 to 4, wherein the agitator shaft is received within the reaction chamber by a bearing (1000) that is supported within the reaction chamber.

6. Reaction chamber according to any one of Claims 1 to 5, wherein the sleeve (800) comprises a polymeric material.

7. Reaction chamber according to any one of Claims 1 to 6, wherein the chamber has a ratio of height to diameter of ≥ 0.4:1 to ≤ 1:1.

8. Reaction chamber according to any one of Claims 2 to 7, wherein the gap (900) between agitator shaft (400) and sleeve (800) has a width from > 0 mm to ≤ 5 mm.

9. Reaction chamber according to any one of Claims 1 to 8, in addition comprising additional feeds (2600) and/or outlets (2610), through which substances can be introduced and/or discharged.

10. Chemical reactor, **characterized in that** the reactor comprises a multiplicity of reaction chambers according to any one of Claims 1 to 9, wherein at least one first reaction chamber and one second reaction chamber are arranged following one another and the agitator shaft for the first reaction chamber is connected to the agitator shaft of the second reaction chamber to transmit a torque.

11. Process for carrying out a chemical reaction, **characterized in that** the reaction is carried out in a reactor according to Claim 10.

12. Process according to Claim 11, wherein the reaction is carried out at least intermittently with a constant amount of substances introduced into the reactor and discharged from the reactor.

13. Process according to Claim 11 or 12, wherein in the stirred reactor, there are arranged following one another, a first reaction chamber according to claim 9 and a second reaction chamber according to claim 9 and the agitator shaft of the first reaction chamber is connected to the agitator shaft of the second reaction chamber to transmit a torque and furthermore at least one operating state is monitored in the first and/or second reaction chamber, at a predetermined deviation of the operating state from a predetermined value of this operating state the feeds opening out into this reaction chamber are closed and the substances originally transported through these feeds are introduced into another reaction chamber.

14. Process according to Claim 13, wherein the monitored operating state is the pressure drop from one reaction chamber to the adjacent reaction chamber.

15. Process according to any one of Claims 11 to 14, wherein the reaction is a multiphase reaction.

## Revendications

1. Chambre de réaction pour un réacteur chimique, comprenant:
- une enveloppe (100) de la chambre de réaction,
- un fond (200) de la chambre de réaction avec une ouverture (300) se trouvant dans le fond,
- un arbre d'agitateur (400) se trouvant dans la chambre avec au moins un élément d'agitateur (500) relié à celui-ci, dans laquelle l'arbre d'agitateur (400), considéré en direction longitudinale, présente un commencement (600) et une fin (700),
**caractérisée en ce que**
- il est prévu dans l'ouverture (300) du fond (400) une douille amovible (800), qui sort de la chambre de réaction,
- la douille (800) est alignée avec l'axe de rotation de l'arbre d'agitateur (400),
- le diamètre intérieur de la douille (800) est plus grand que le diamètre de l'arbre d'agitateur (400), et
- l'arbre d'agitateur (400) est conçu, à son commencement (600) et/ou à sa fin (700), pour reprendre de façon réversible un couple produit par un autre arbre et/ou pour transmettre un couple à un autre arbre.

2. Chambre de réaction selon la revendication 1, dans laquelle l'arbre d'agitateur (400) est mené hors de la chambre de réaction à travers la douille (800), de telle manière qu'il sorte hors de la chambre de réaction et qu'une fente (900) soit formée entre l'arbre d'agitateur et la douille.

3. Chambre de réaction selon la revendication 1 ou 2, dans laquelle le fond (200) présente une inclinaison de > 0° à ≤ 60° par rapport à l'horizontale.

4. Chambre de réaction selon l'une quelconque des revendications 1 à 3, dans laquelle l'enveloppe (100) et le fond (200) de la chambre de réaction sont réalisés ensemble sous la forme d'une enveloppe chauffante et/ou réfrigérante.

5. Chambre de réaction selon l'une quelconque des revendications 1 à 4, dans laquelle l'arbre d'agitateur est supporté à l'intérieur de la chambre de réaction par un palier (1000), qui est supporté à l'intérieur de la chambre de réaction.

6. Chambre de réaction selon l'une quelconque des revendications 1 à 5, dans laquelle la douille (800) comprend un matériau polymère.

7. Chambre de réaction selon l'une quelconque des revendications 1 à 6, dans laquelle la chambre présente un rapport de la hauteur au diamètre de ≥ 0,4:1 à ≤ 1:1.

8. Chambre de réaction selon l'une quelconque des revendications 2 à 7, dans laquelle la fente (900) entre l'arbre d'agitateur (400) et la douille (800) présente une largeur de > 0 mm à ≤ 5 mm.

9. Chambre de réaction selon l'une quelconque des revendications 1 à 8, comprenant en outre des arrivées (2600) et/ou des évacuations (2610) supplémentaires, par lesquelles les substances peuvent être introduites et/ou extraites.

10. Réacteur chimique, **caractérisé en ce que** le réacteur comprend une multiplicité de chambres de réaction selon l'une quelconque des revendications 1 à 9, dans lequel au moins une première chambre de réaction et une seconde chambre de réaction sont disposées à la suite l'une de l'autre et l'arbre d'agitateur de la première chambre de réaction est relié à l'arbre d'agitateur de la seconde chambre de réaction pour la transmission d'un couple.

11. Procédé pour effectuer une réaction chimique, **caractérisé en ce que** la réaction est effectuée dans un réacteur selon la revendication 10.

12. Procédé selon la revendication 11, dans lequel on effectue la réaction au moins temporairement avec une quantité constante de substances introduites dans le réacteur et extraites hors du réacteur.

13. Procédé selon la revendication 11 ou 12, dans lequel dans le réacteur à agitation une première chambre de réaction selon la revendication 9 et une seconde chambre de réaction selon la revendication 9 sont disposées l'une à la suite de l'autre et l'arbre d'agitateur de la première chambre de réaction est relié à l'arbre d'agitateur de la seconde chambre de réaction pour la transmission d'un couple et en outre on surveille au moins un état de fonctionnement dans la première et/ou la seconde chambre de réaction, lors d'un écart déterminé au préalable de l'état de fonctionnement par rapport à une valeur déterminée au préalable pour cet état de fonctionnement, on ferme les arrivées débouchant dans cette chambre de réaction et on introduit les substances transportés initialement par ces arrivées dans une autre chambre de réaction.

14. Procédé selon la revendication 13, dans lequel l'état de fonctionnement surveillé est la baisse de pression d'une chambre de réaction par rapport à la chambre de réaction voisine.

15. Procédé selon l'une quelconque des revendications 11 à 14, dans lequel la réaction est une réaction multiphasique.
